# EUROPEAN PATENT SPECIFICATION

(11) **EP 4 228 226 B1**
(45) Date of publication and mention of the grant of the patent: **07.10.2026**
(21) Application number: 21885136.8
(22) Date of filing: 26.10.2021
(51) Int. Cl.: H04M 1/7243, G06F 3/04817, G06F 3/0486, H04L 51/08, H04L 51/04

(54) **FILE SENDING METHOD AND APPARATUS, AND ELECTRONIC DEVICE**
DATEISENDEVERFAHREN UND -VORRICHTUNG SOWIE ELEKTRONISCHE VORRICHTUNG
PROCÉDÉ ET APPAREIL D'ENVOI DE FICHIER, ET DISPOSITIF ÉLECTRONIQUE

(30) Priority: 28.10.2020 CN 202011174568
(43) Date of publication of application: 16.08.2023
(73) Proprietor: Vivo Mobile Communication Co., Ltd., Dongguan, Guangdong 523863 (CN)
(72) Inventor: LIU, Lei, Hangzhou, Zhejiang 311100 (CN)
(74) Representative: Murgitroyd & Company
(86) International application number: PCT/CN2021/126341
(87) International publication number: WO 2022/089409

(56) References cited:
- CN-A- 106 777 332
- CN-A- 107 239 199
- CN-A- 110 287 145
- CN-A- 112 399 006
- US-A1- 2004 162 877
- US-A1- 2006 085 508
- US-A1- 2008 147 746
- US-A1- 2012 265 817
- US-A1- 2013 283 144
- US-A1- 2014 136 934
- US-A1- 2020 218 694

## Description

### TECHNICAL FIELD

This application pertains to the field of communication technologies, and specifically, to a file sending method and apparatus, and an electronic device.

### BACKGROUND

Generally, after receiving some files, a chat application program on an electronic device may store these files in a folder in a default path, so that a user can subsequently search the folder for the files when the user needs to use the files. Specifically, when the user sends a file in the chat application program by using a mail application program, the user may first select a storage directory of the chat application program in a setting application program, and then search a plurality of folders in the storage directory for a required folder, to obtain a storage path of the file, so that the user can send the file by using the mail application program based on the obtained storage path.

However, in the foregoing method, the user needs to perform an input for a plurality of times, the user first search a plurality of folders one by one to find a required file, and then sends the file. Consequently, operations of the user are cumbersome and time-consuming, resulting in low file sending efficiency.

US 2012/0265817 A1 proposes a method for managing email attachments in an email application, said method used, on opening an attachment using an editing application defined based on the nature of said attachment, to edit a copy of said attachment and to save the modifications made to said copy as a modified version of said attachment.

US 2006/0085508 A1 provides an E-mail communication apparatus that edits files attached to an E-mail and transmits the E-mail.

US 2013/0283144 A1 relates to a method in which a user can written a memo on an image message in a editing mode, and send the image message having the memo in a chat window.

US 2004/0162877 A1 discloses that, a user can drag and drop a file into an input box of a user interface, so as to send the file. And the user who receives the file can select to open or save the file.

US 2008/0147746 A1 shows a user interface display where a last directory used is proposed, and a user interface which proposes on top of a regular default directory, based on a folder where a current mail resides.

US 2020/218694 A1 discloses a file management method and an apparatus for performing file management on a target file if the storage path of the target file is successfully found.

### SUMMARY

An objective of embodiments of this application is to provide a file sending method and apparatus, and an electronic device, to resolve a problem that file sending efficiency of the electronic device is low.

To resolve the foregoing technical problem, this application is implemented as follows:

According to a first aspect, an embodiment of this application provides a file sending method, which is defined in claim 1.

According to a second aspect, an embodiment of this application provides a file sending apparatus, which is defined in claim 4.

According to a third aspect, an embodiment of the present application provides an electronic device, which is defined in claim 7.

According to a fourth aspect, an embodiment of this application provides a readable storage medium, which is defined in claim 8.

According to a fifth aspect, an embodiment of this application provides a chip, which is defined in claim 9.

According to a sixth aspect, an embodiment of this application provides a computer program product, which is defined in claim 10.

Further advantageous embodiments of the present disclosure are indicated in the dependent claims.

It is to be understood that both the foregoing general description and the following detailed description are exemplary only, and are not restrictive of the present disclosure.

### BRIEF DESCRIPTION OF THE DRAWINGS

FIG. 1 is a first schematic diagram of a file sending method according to an embodiment of this application;
FIG. 2 is a first schematic diagram of an example of an interface of a mobile phone according to an embodiment of this application;
FIG. 3 is a second schematic diagram of an example of an interface of a mobile phone according to an embodiment of this application;
FIG. 4A is a third schematic diagram of an example of an interface of a mobile phone according to an embodiment of this application;
FIG. 4B is a fourth schematic diagram of an example of an interface of a mobile phone according to an embodiment of this application;
FIG. 5 is a second schematic diagram of a file sending method according to an embodiment of this application;
FIG. 6 is a fifth schematic diagram of an example of an interface of a mobile phone according to an embodiment of this application;
FIG. 7 is a third schematic diagram of a file sending method according to an embodiment of this application;
FIG. 8 is a schematic diagram of a structure of a file sending apparatus according to an embodiment of this application;
FIG. 9 is a first schematic diagram of a hardware structure of an electronic device according to an embodiment of this application; and
FIG. 10 is a second schematic diagram of a hardware structure of an electronic device according to an embodiment of this application.

### DETAILED DESCRIPTION

The following clearly and completely describes the technical solutions in the embodiments of this application with reference to the accompanying drawings in the embodiments of this application. Apparently, the described embodiments are some but not all of the embodiments of this application.

In the specification and claims of this application, the terms "first" and "second" are used to distinguish between similar objects, but are unnecessarily used to describe a specific sequence or order. It should be understood that data terms in such a way is exchangeable in a proper case, so that the embodiments of this application described herein can be implemented in an order other than the order shown or described herein. In addition, objects distinguished by "first", "second", and the like are generally of one type, and a quantity of objects is not limited. For example, there may be one or more first objects. In addition, "and/or" in this specification and the claims represents at least one of the connected objects, and the character "/" generally represents an "or" relationship between the associated objects.

With reference to the accompanying drawings, the following describes, by using a specific embodiment and an application scenario thereof, in detail a file sending method provided in embodiments of this application.

In the embodiments of this application, when a user needs to send a file received by an application program (for example, a chat application program) on an electronic device to another device by using another application program (for example, an email application program), there are two manners. In one manner, the user may directly perform an input (for example, perform the input through touching and holding or input a file name of a target file) for a target file in a conversation interface of the chat application program, to quickly locate a storage path/location of the target file, so that the user can add the target file to the mail application program based on the storage path of the target file, to quickly send the file. In the other manner, the user may directly perform an input (for example, perform the input through dragging) for a target file in a conversation interface of the chat application program, so that the electronic device displays a desktop, generates and displays a temporary identifier of the target file on the desktop. In this way, the user may drag the temporary identifier of the target file to an area in which an identifier of the mail application program is located on the desktop, to add the target file to the mail application program, so as to quick send the file.

It should be noted that, in the embodiments of this application, a multi-screen transfer function is supported. That is, the electronic device may include a plurality of screens, and the temporary identifier of the target file may be displayed on one screen. The user may perform an input by dragging the temporary identifier of the target file displayed on the screen, to drag the temporary identifier of the target file to the identifier of the mail application displayed on another screen, so as to add the target file.

The embodiments of this application provide a convenient, quick, and easy-to-operate method for adding a file as an attachment of an application program. The input may be performed for a file to obtain a storage location of the file, or a file is directly dragged, to add the file to another application program (that is, an application program in which the file can be added as an attachment) as an attachment. The user does not need to send the file by obtaining the storage location of the file by perform searching one by one on the electronic device, thereby reducing time consumed by an operation of the user, and improving file sending efficiency.

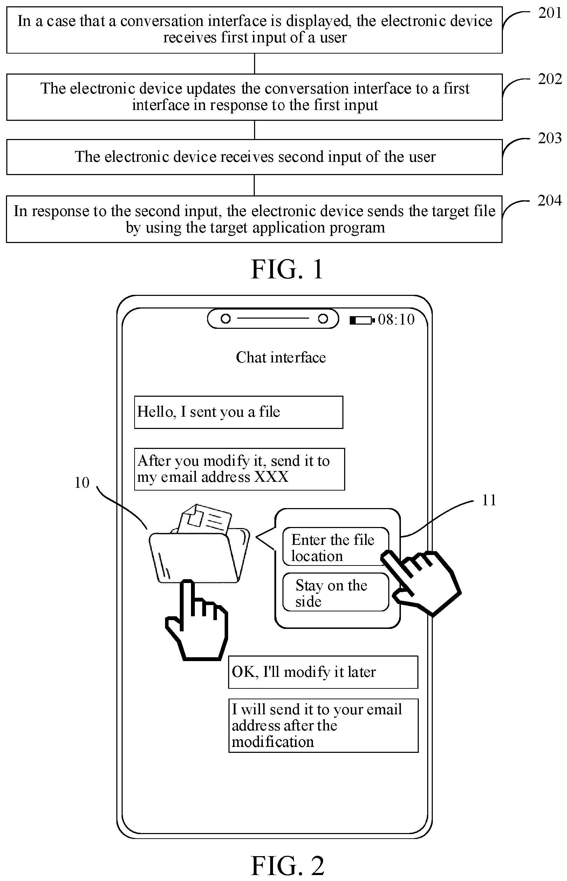

An embodiment of this application provides a file sending method. FIG. 1 is a flowchart of a file sending method according to an embodiment of this application. The method may be applied to an electronic device. As shown in FIG. 1, the file sending method provided in this embodiment of this application may include the following steps 201 to 204.

Step 201: In a case that a conversation interface is displayed, the electronic device receives a first input of a user.

In this embodiment of this application, the conversation interface includes at least one file, and the first input is an input performed by the user for a target file in the at least one file.

In this embodiment of this application, in a case that the electronic device displays a conversation interface/a chat interface of an application program (an application program having a message transmission function, such as a chat application program), the user finds a required file in the conversation interface, and then performs input for the file, so that the electronic device displays an interface associated with the file.

Optionally, in this embodiment of this application, the foregoing first input may be input performed by the user by touching and holding the target file in the conversation interface, to trigger the electronic device to display an option box (that is, a prompt window in the following embodiment) corresponding to the target file. The option box includes a control used to enter a storage location of a file, so that the user can perform input for the control, and the electronic device jumps to an interface corresponding to the storage location of the file.

For example, that the electronic device is a mobile phone is used as an example for description. As shown in FIG. 2, the mobile phone displays a chat interface. The chat interface includes a target file 10. The user may perform first input for the target file 10, so that the mobile phone displays an option box 11. The option box 11 includes a control "Enter a file location", so that the user can perform input for the control, and the mobile phone jumps to an interface corresponding to a storage location of the target file 10.

Optionally, in this embodiment of this application, the foregoing first input may be an input performed by the user for a file name of the target file in an input area (that is, a target input area described in the following embodiment) in the conversation interface, to trigger the electronic device to search the electronic device for a corresponding file based on the file name to obtain a storage location of the file, so as to display a window (that is, a prompt window described in the following embodiment). The window includes a storage path of the target file, so that the user can perform input for the storage path (which may be an icon of the storage path) of the target file, and the electronic device jumps to an interface corresponding to the storage location of the file.

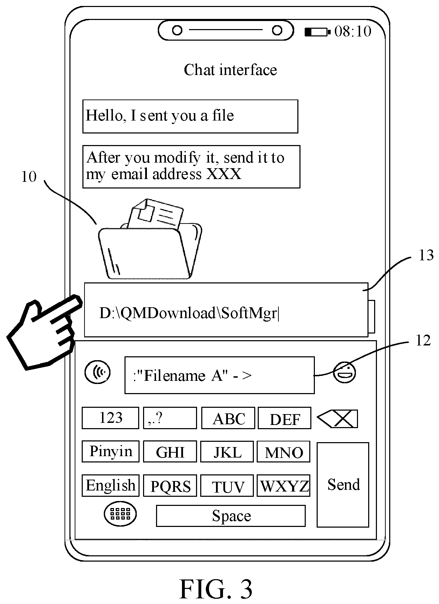

For example, as shown in FIG. 3, the mobile phone displays a chat interface. The chat interface includes a target file 10. The user may perform first input (for example, input a file name "file name A") in an input box 12, so that the mobile phone searches for a file corresponding to the "file name A" to obtain a storage location of the target file 10, and displays a window 13. The window 13 includes a storage path of the target file 10, so that the user can perform input for an icon of the storage path of the target file 10, and the mobile phone jumps to an interface corresponding to the storage location of the target file 10.

Optionally, in this embodiment of this application, the foregoing first input may be input (for example, an input of dragging the target file to a screen edge area) performed by the user by dragging the target file in the conversation interface, to trigger the electronic device to jump from the conversation interface to a desktop, and display an identifier (for example, an icon of the target file) of the target file on the desktop.

Optionally, in this embodiment of this application, the electronic device may display the identifier of the target file on the desktop in a preset manner. The preset manner may be any one of the following: a highlight display manner, a gray display manner, a flicker display manner, a dotted-line box mark display manner, and the like.

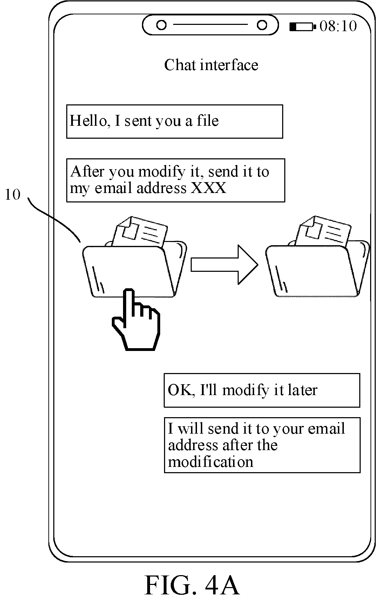

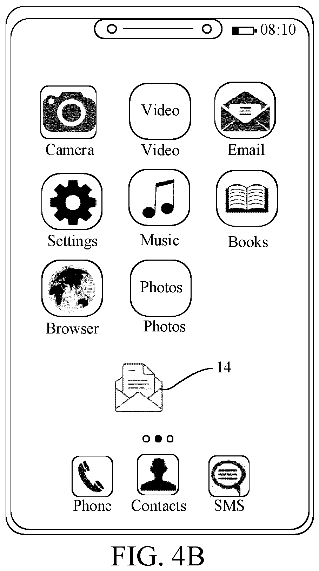

For example, as shown in FIG. 4A, the mobile phone displays a chat interface, and the chat interface includes a target file 10. The user may drag the target file 10 to a screen edge area, so that the mobile phone jumps to a desktop shown in FIG. 4B, so as to display an identifier 14 of the target file 10 on the desktop.

Step 202: The electronic device updates the conversation interface to a first interface in response to the first input.

In this embodiment of this application, the foregoing first interface is a desktop or a target interface displayed based on a storage path of the target file, the desktop includes an identifier of the target file, and the target interface includes the target file.

It should be noted that, the updating the conversation interface to a first interface may be understood as directly jumping from the conversation interface to the first interface; and the target interface displayed based on the storage path of the target file may be understood as an interface corresponding to a storage location used to store the target file.

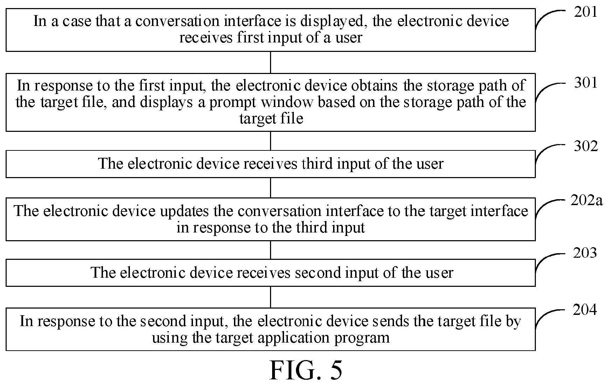

Optionally, in an implementation of this embodiment of this application, the first interface is the target interface. With reference to FIG. 1, as shown in FIG. 5, before the "updating the conversation interface to a first interface" in the foregoing step 202, the file sending method provided in this embodiment of this application further includes the following step 301 and step 302, and the foregoing step 202 may be specifically implemented by using the following step 202a.

Step 301: In response to the first input, the electronic device obtains the storage path of the target file, and displays a prompt window based on the storage path of the target file.

In this embodiment of this application, the foregoing prompt window includes at least one of the following: a first control and the storage path of the target file, where the first control is used to display a storage area of a file on the electronic device.

Optionally, in this embodiment of this application, the prompt window includes at least the storage path of the target file, the conversation interface further includes a target input area, the target input area is used to input a file name of a file, and the first input is an input performed by the user for a file name of the target file in the target input area.

It should be noted that, in this manner, the foregoing first input may be input performed by the user by touching and holding the target file in the conversation interface, or input for the file name of the target file in the input area in the conversation interface.

Optionally, in this embodiment of this application, the target input area may be an input-method input box in the conversation interface, and the user may input the file name of the target file in a target manner (for example, input the file name and a target symbol) in the input-method input box, so that the electronic device can search for the target file. Alternatively, the target input area may be input performed by the user in the conversation interface, to trigger an input area (the input area is an area specifically used to input a file name) displayed by the electronic device.

It should be noted that, for specific descriptions of the first control and the storage path of the target file, refer to related descriptions of the foregoing first input. Details are not described herein again.

Optionally, in this embodiment of this application, the "obtaining the storage path of the target file" in the foregoing step 301 may be specifically implemented by using the following step 301a.

Step 301a: The electronic device determines, from a storage area on the electronic device based on the file name of the target file, a file corresponding to the file name of the target file, to obtain the storage path of the target file.

It should be noted that, the storage area of the electronic device may be understood as an area that is on the electronic device and that is used to store a file, for example, a file (for example, a file received by using each application program) of an application program or a configuration file. The electronic device may perform global searching to find, from all files, a file corresponding to a file name input by the user, thereby determining a storage location/storage path of the file on the electronic device.

Step 302: The electronic device receives a third input of the user.

Optionally, in this embodiment of this application, the foregoing third input (for example, input performed through tapping) may be an input performed by the user for the first control in the prompt window. Alternatively, the foregoing third input may be an input performed by the user for an identifier of the storage path of the target file in the prompt window.

Step 202a: The electronic device updates the conversation interface to the target interface in response to the third input.

In this embodiment of this application, the user may directly perform input (for example, perform input through touching and holding or input a file name) for the target file in the conversation interface, to quickly obtain the storage location of the file. In this way, subsequently, the user can quickly add the file to a target application program in a timely manner for sending, to improve file sending efficiency.

Step 203: The electronic device receives a second input of the user.

In this embodiment of this application, the foregoing second input is an input performed by the user for the target file and the target application program.

Optionally, in this embodiment of this application, in a case that the foregoing first interface is the target interface, the foregoing second input is an input performed by the user for an identifier of the target application program and the target file. Specifically, the user may perform input for the identifier of the target application program, to open the target application program (for example, an email application program). Then, the user may add an attachment to the target application program, that is, enter, based on the storage path of the target file, a file directory corresponding to the target file, to perform selection and input for the target file, so as to add the target file to the target application program to complete file sending.

Optionally, in this embodiment of this application, after the user triggers the electronic device to add the target file to the target application program, the user may edit mail content in the target application program, and then complete mail sending.

Optionally, in this embodiment of this application, the first interface is the target interface. Before the foregoing step 203, the file sending method provided in this embodiment of this application further includes the following step 401 and step 402.

Step 401: The electronic device receives a fourth input of the user.

In this embodiment of this application, the foregoing fourth input is an input performed by the user for the target file in the target interface.

In this embodiment of this application, the foregoing fourth input is input (for example, input for a moving control) performed by the user based on a file moving function, to trigger the electronic device to move the target file displayed in the target interface to another folder.

Step 402: The electronic device moves the target file to a target folder in response to the fourth input.

Optionally, in this embodiment of this application, the foregoing target folder may be a folder created in advance by the user or a folder created for the target file.

Optionally, in this embodiment of this application, the user may create a folder at an easy-to-remember storage location in advance and name the folder, so that the user can subsequently move the target file to the newly created folder.

Optionally, in this embodiment of this application, after the user moves the target file to the created folder, the user may modify the name of the folder.

In this embodiment of this application, before the target file is added to the target application program, the user may first move the target file to a folder whose storage location is known to the user. Therefore, when the target file is subsequently added to the target application program, the target file may be found more quickly, to quickly add the file.

Optionally, in this embodiment of this application, in a case that the first interface is the desktop, the desktop further includes an identifier of the target application program, and the second input is input performed by the user by dragging the identifier of the target file to the identifier of the target application program.

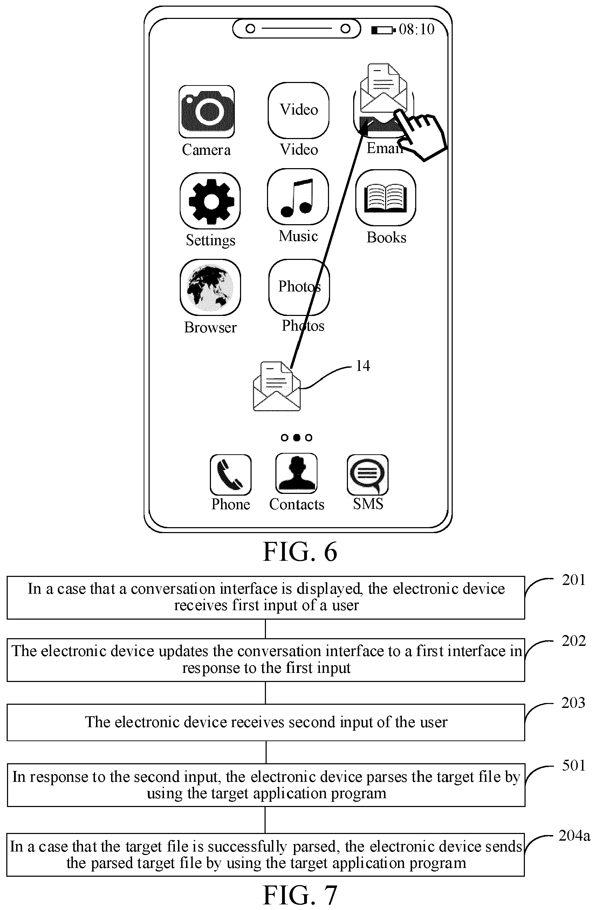

For example, with reference to FIG. 4B, as shown in FIG. 6, the user may drag the identifier 14 of the target file 10 displayed on the desktop to an icon of the mail application, so that the mobile phone adds the target file 10 to the mail application.

Step 204: In response to the second input, the electronic device sends the target file by using the target application program.

In this embodiment of this application, the electronic device may add the target file to the target application program based on the second input of the user, to send the target file by using the target application program.

Optionally, in another implementation of this embodiment of this application, the foregoing first interface is the desktop. With reference to FIG. 1, as shown in FIG. 7, before the "sending the target file by using the target application program" in the foregoing step 204, the file sending method provided in this embodiment of this application further includes the following step 501, and the foregoing step 204 may be specifically implemented by using the following step 204a.

Step 501: In response to the second input, the electronic device parses the target file by using the target application program.

Optionally, in this embodiment of this application, the electronic device may parse the target file to obtain a format of the target file, content of the target file, storage space occupied by the target file, and the like.

Step 204a: In a case that the target file is successfully parsed, the electronic device sends the parsed target file by using the target application program.

Optionally, in this embodiment of this application, after sending the target file by using the target application program, the electronic device may cancel displaying the identifier of the target file on the desktop.

Optionally, in this embodiment of this application, if the electronic device cannot parse the target file or fails to parse the target file, the electronic device does not add the target file to the target application program for sending, and cancels displaying the identifier of the target file on the desktop.

In the file sending method provided in this embodiment of this application, in a case that the conversation interface including the at least one file is displayed, the electronic device may update, based on the first input of the user, the conversation interface to the desktop or the target interface displayed based on the storage path of the target file, so that the user can perform input for the target file and the target application program, and the electronic device sends the target file by using the target application program. The user may directly perform input for the target file in the conversation interface, so that the electronic device jumps to the interface corresponding to the storage path of the target file or the desktop. Therefore, when the user adds the file, the user may quickly add, for sending, the file to the target application program based on the known storage path of the target file, or may directly perform input for the identifier of the target file on the desktop, to quickly add the file to the target application program for sending. The user does not need to send the file by obtaining the storage location of the file by perform searching one by one on the electronic device, thereby reducing time consumed by an operation of the user, and improving file sending efficiency.

It should be noted that, the file sending method provided in this embodiment of this application may be performed by a file sending apparatus, or a control module that is in the file sending apparatus and that is configured to perform the file sending method. In this embodiment of this application, that the file sending apparatus performs the file sending method is used as an example to describe the file sending apparatus provided in this embodiment of this application.

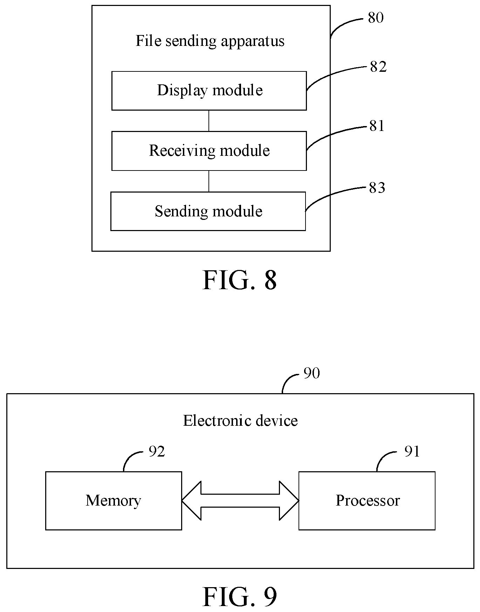

FIG. 8 is a schematic diagram of a possible structure of a file sending apparatus according to an embodiment of this application. As shown in FIG. 8, the file sending apparatus 80 may include a receiving module 81, a display module 82, and a sending module 83.

The receiving module 81 is configured to: in a case that a conversation interface is displayed, receive a first input of a user, where the conversation interface includes at least one file, and the first input is an input performed by the user for a target file in the at least one file. The display module 82 is configured to update the conversation interface to a first interface in response to the first input received by the receiving module 81, where the first interface is a desktop or a target interface displayed based on a storage path of the target file, the desktop includes an identifier of the target file, and the target interface includes the target file. The receiving module 81 is further configured to receive a second input of the user, where the second input is an input performed by the user for the target file and a target application program. The sending module 83 is configured to: in response to the second input received by the receiving module 81, send the target file by using the target application program.

In a possible implementation, the first interface is the target interface. The file sending apparatus 80 provided in this embodiment of this application further includes an obtaining module. The obtaining module is configured to: before the display module 82 updates the conversation interface to the first interface, obtain the storage path of the target file. The display module 82 is further configured to display a prompt window based on the storage path that is of the target file and that is obtained by the obtaining module, where the prompt window includes at least one of the following: a first control and the storage path of the target file, where the first control is used to display a storage area of a file on an electronic device. The receiving module 81 is further configured to receive a third input of the user. The display module 82 is specifically configured to update the conversation interface to the target interface in response to the third input received by the receiving module 81.

In a possible implementation, the prompt window includes at least the storage path of the target file, the conversation interface further includes a target input area, the target input area is used to input a file name of a file, and the first input is an input performed by the user for a file name of the target file in the target input area. The obtaining module is specifically configured to determine, from a storage area on the electronic device based on the file name of the target file, a file corresponding to the file name of the target file, to obtain the storage path of the target file.

In a possible implementation, the receiving module 81 is further configured to: before receiving the second input of the user, receive a fourth input of the user, where the fourth input is an input performed by the user for the target file in the target interface. The file sending apparatus 80 provided in this embodiment of this application further includes a moving module. The moving module is configured to move the target file to a target folder in response to the fourth input received by the receiving module 81, where the target folder is a folder created by the user.

In a possible implementation, the first interface is the desktop, the desktop further includes an identifier of the target application program, and the second input is input performed by the user by dragging the identifier of the target file to the identifier of the target application program. The file sending apparatus 80 provided in this embodiment of this application further includes a parsing module. The parsing module is configured to: before the sending module 83 sends the target file by using the target application program, parse the target file by using the target application program. The sending module 83 is specifically configured to: in a case that the target file is successfully parsed, send the parsed target file by using the target application program.

According to the file sending apparatus provided in this embodiment of this application, the user may directly perform input for the target file in the conversation interface, so that the electronic device jumps to the interface corresponding to the storage path of the target file or the desktop. Therefore, when the user adds the file, the user may quickly add, for sending, the file to the target application program based on the known storage path of the target file, or may directly perform input for the identifier of the target file on the desktop, to quickly add the file to the target application program for sending. The user does not need to send the file by obtaining the storage location of the file by perform searching one by one on the electronic device, thereby reducing time consumed by an operation of the user, and improving file sending efficiency.

The file sending apparatus in this embodiment of this application may be an apparatus, or may be a component, an integrated circuit, or a chip in a terminal. The apparatus may be a mobile electronic device or may be a non-mobile electronic device. For example, the mobile electronic device may be a mobile phone, a tablet computer, a notebook computer, a palm computer, an in-vehicle electronic device, a wearable device, an ultra-mobile personal computer (ultra-mobile personal computer, UMPC), a netbook, or a personal digital assistant (personal digital assistant, PDA). The non-mobile electronic device may be a server, a network attached storage (Network Attached Storage, NSA), a personal computer (personal computer, PC), a television (television, TV), a teller machine, or an automated machine. This is not specifically limited in this embodiment of this application.

The file sending apparatus in this embodiment of this application may be an apparatus with an operating system. The operating system may be an Android (Android) operating system, may be an iOS operating system, or may be another possible operating system. This is not specifically limited in this embodiment of this application.

The file sending apparatus provided in this embodiment of this application can implement various processes implemented in the foregoing method embodiments. To avoid repetition, details are not described herein again.

Optionally, as shown in FIG. 9, an embodiment of this application further provides an electronic device 90, including a processor 91, a memory 92, and a program or instructions stored in the memory 92 and executable on the processor 91. When the program or the instructions is or are executed by the processor 91, various processes in the foregoing method embodiments are implemented, and a same technical effect can be achieved. To avoid repetition, details are not described herein again.

It should be noted that, the electronic device in this embodiment of this application includes the foregoing mobile electronic device and non-mobile electronic device.

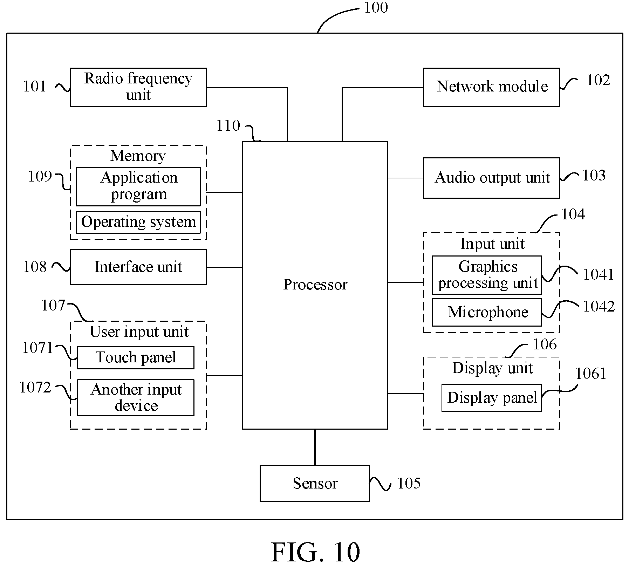

FIG. 10 is a second schematic diagram of a hardware structure of an electronic device that implements an embodiment of this application.

The electronic device 100 includes but is not limited to a radio frequency unit 101, a network module 102, an audio output unit 103, an input unit 104, a sensor 105, a display unit 106, a user input unit 107, an interface unit 108, a memory 109, and a processor 110.

A person skilled in the art may understand that the electronic device 100 may further include a power supply (for example, a battery) that supplies power to each component. The power supply may be logically connected to the processor 110 by using a power management system, to manage functions such as charging, discharging, and power consumption by using the power management system. The structure of the electronic device shown in FIG. 10 constitutes no limitation on the electronic device, and the electronic device may include more or fewer components than those shown in the figure, or combine some components, or have different component arrangements. Details are not described herein again.

The user input unit 107 is configured to: in a case that a conversation interface is displayed, receive first input of a user, where the conversation interface includes at least one file, and the first input is an input performed by the user for a target file in the at least one file.

The display unit 106 is configured to update the conversation interface to a first interface in response to the first input, where the first interface is a desktop or a target interface displayed based on a storage path of the target file, the desktop includes an identifier of the target file, and the target interface includes the target file.

The user input unit 107 is further configured to receive second input of the user, where the second input is an input performed by the user for the target file and a target application program.

The network module 102 is configured to: in response to the second input, send the target file by using the target application program.

According to the electronic device provided in this embodiment of this application, the user may directly perform input for the target file in the conversation interface, so that the electronic device jumps to the interface corresponding to the storage path of the target file or the desktop. Therefore, when the user adds the file, the user may quickly add, for sending, the file to the target application program based on the known storage path of the target file, or may directly perform input for the identifier of the target file on the desktop, to quickly add the file to the target application program for sending. The user does not need to send the file by obtaining the storage location of the file by perform searching one by one on the electronic device, thereby reducing time consumed by an operation of the user, and improving file sending efficiency.

It should be understood that, in this embodiment of this application, the input unit 104 may include a graphics processing unit (Graphics Processing Unit, GPU) 1041 and a microphone 1042. The graphics processing unit 1041 processes image data of a still picture or a video obtained by an image capture apparatus (such as a camera) in a video capture mode or an image capture mode. The display unit 106 may include a display panel 1061. The display panel 1061 may be configured in a form such as a liquid crystal display or an organic light-emitting diode. The user input unit 107 may include a touch panel 1071 and another input device 1072. The touch panel 1071 is also referred to as a touchscreen. The touch panel 1071 may include two parts: a touch detection apparatus and a touch controller. The another input device 1072 may include but is not limited to a physical keyboard, a function key (such as a volume control key or an on/off key), a trackball, a mouse, and a joystick. Details are not described herein. The memory 109 may be configured to store a software program and various data, including but not limited to an application program and an operating system. The processor 110 may integrate an application processor and a modem processor, where the application processor mainly processes an operating system, a user interface, an application program, and the like, and the modem processor mainly processes wireless communication. It may be understood that the modem processor may not be integrated into the processor 110.

An embodiment of this application further provides a readable storage medium. The readable storage medium stores a program or instructions. When the program or the instructions is or are executed by a processor, various processes in the foregoing method embodiments are implemented, and a same technical effect can be achieved. To avoid repetition, details are not described herein again.

The processor is a processor in the electronic device in the foregoing embodiment. The readable storage medium includes a computer-readable storage medium such as a read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions to implement various processes in the foregoing method embodiments, and a same technical effect can be achieved. To avoid repetition, details are not described herein again.

It should be understood that the chip mentioned in this embodiment of this application may also be referred to as a system-level chip, a system chip, a chip system, or a system on chip.

It should be noted that, the terms "include", "comprise", or any other variation thereof in this specification are intended to cover a non-exclusive inclusion, so that a process, method, article, or apparatus that includes a list of elements includes the elements, and also includes other elements that are not expressly listed, or further includes elements inherent to such a process, method, article, or apparatus. Without more limitations, elements defined by the sentence "including one" does not exclude that there are still other same elements in the processes, methods, objects, or apparatuses that include the elements. In addition, it should be noted that the scope of the method and apparatus in the embodiments of this application is not limited to performing a function in a sequence shown or discussed, and may further include performing a function in a basically simultaneous manner or in a reverse sequence based on a related function. For example, the described method may be performed in an order from the described order, and various steps may be added, omitted, or combined. In addition, features described with reference to some examples may be combined in other examples.

Based on the descriptions in the foregoing implementations, a person skilled in the art may clearly learn that the method in the foregoing embodiment may be implemented by software in addition to a necessary universal hardware platform or by hardware only. In most circumstances, the former is a better implementation. Based on such an understanding, the technical solutions of this application essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. The foregoing specific implementations are merely examples, and are not restrictive.

## Claims

1. A file sending method, performed by an electronic device, wherein the method comprises:
in a case that a conversation interface is displayed, receiving (201) a first input of a user, wherein the conversation interface comprises at least one file, and the first input is an input performed by the user for a target file (10) in the at least one file;
jumping from the conversation interface to a first interface in response to the first input, wherein the first interface is a target interface corresponding to a storage location used to store the target file (10), and the target interface comprises the target file (10);
receiving (203) a second input of the user, wherein the second input is an input performed by the user for the target file (10) in the first interface and an identifier of a target application program; and
in response to the second input, sending (204) the target file (10) by using the target application program; wherein
the conversation interface is an interface in an application program that is different from the target application; and
before the jumping from the conversation interface to a first interface, the method further comprises:
obtaining (301) the storage path of the target file (10), and displaying (301) a prompt window based on the storage path of the target file (10), wherein the prompt window comprises at least one of the following: a first control and the storage path of the target file (10), wherein the first control is used to display a storage area of the target file (10) on the electronic device; and
receiving (302)a third input of the user performed for the first control or an identifier of the storage path of the target file (10) in the prompt window; and
the jumping from the conversation interface to a first interface comprises:
jumping from the conversation interface to the target interface in response to the third input.

2. The method according to claim 1, wherein the prompt window comprises at least the storage path of the target file (10), the conversation interface further comprises a target input area, the target input area is used to input a file name of a file, and the first input is an input performed by the user for a file name of the target file (10) in the target input area; and
the obtaining (301) the storage path of the target file (10) comprises:
determining, from a storage area on the electronic device based on the file name of the target file (10), a file corresponding to the file name of the target file (10), to obtain the storage path of the target file (10).

3. The method according to claim 1 or 2, wherein before the receiving (203) the second input of the user, the method further comprises:
receiving a fourth input of the user, wherein the fourth input is an input performed by the user for the target file (10) in the target interface; and
moving the target file (10) to a target folder in response to the fourth input.

4. A file sending apparatus (80), where the file sending apparatus (80) comprises: a receiving module (81), a display module (82), and a sending module (83), wherein
the receiving module (81) is configured to: in a case that a conversation interface is displayed, receive a first input of a user, wherein the conversation interface comprises at least one file, and the first input is an input performed by the user for a target file (10) in the at least one file;
the display module (82) is configured to jump from the conversation interface to a first interface in response to the first input received by the receiving module (81), wherein the first interface is a target interface corresponding to a storage location used to store the target file (10), and the target interface comprises the target file (10);
the receiving module (81) is further configured to receive a second input of the user, wherein the second input is an input performed by the user for the target file (10) in the first interface and an identifier of a target application program; and
the sending module (83) is configured to: in response to the second input received by the receiving module (81), send the target file (10) by using the target application program; wherein
the conversation interface is an interface in an application program that is different from the target application; and
the file sending apparatus (80) further comprises: an obtaining module, wherein
the obtaining module is configured to: before the display module (82) jumps from the conversation interface to the first interface, obtain the storage path of the target file (10);
the display module (82) is further configured to display a prompt window based on the storage path that is of the target file (10) and that is obtained by the obtaining module, wherein the prompt window comprises at least one of the following: a first control and the storage path of the target file (10), wherein the first control is used to display a storage area of the target file (10) on the file sending apparatus (80);
the receiving module (81)is further configured to receive a third input of the user performed for the first control or an identifier of the storage path of the target file (10) in the prompt window; and
the display module (82) is specifically configured to jump from the conversation interface to the target interface in response to the third input received by the receiving module (81).

5. The apparatus (80) according to claim 4, wherein the prompt window comprises at least the storage path of the target file (10), the conversation interface further comprises a target input area, the target input area is used to input a file name of a file, and the first input is an input performed by the user for a file name of the target file (10) in the target input area; and the obtaining module is specifically configured to determine, from a storage area on the apparatus based on the file name of the target file (10), a file corresponding to the file name of the target file (10), to obtain the storage path of the target file (10).

6. The apparatus (80) according to claim 4 or 5, wherein the receiving module (81) is further configured to: before receiving the second input of the user, receive a fourth input of the user, wherein the fourth input is an input performed by the user for the target file (10) in the target interface; and
the file sending apparatus (80) further comprises: a moving module, wherein
the moving module is configured to move the target file (10) to a target folder in response to the fourth input received by the receiving module (81), wherein the target folder is a folder created by the user.

7. An electronic device (90, 100), comprising a processor (91, 110), a memory (92, 109), and a program or instructions that is or are stored in the memory (92, 109) and executable on the processor (91, 110), wherein when the program or instructions is or are executed by the processor (91, 110), the steps of the file sending method according to any one of claims 1 to 3 are implemented.

8. A readable storage medium, wherein the readable storage medium stores a program or instructions, and when the program or the instructions is or are executed by a processor (91, 110), the steps of the file sending method according to any one of claims 1 to 3 are implemented.

9. A chip, wherein the chip comprises a processor and a communication interface, the communication interface is coupled to the processor, and the processor is configured to run a program or instructions to implement the file sending method according to any one of claims 1 to 3.

10. A computer program product, wherein a computer program of the computer program product is executed by at least one processor (91, 110) to implement the file sending method according to any one of claims 1 to 3.

## Patentansprüche

1. Ein Dateisendeverfahren, das durch eine elektronische Vorrichtung durchgeführt wird, wobei das Verfahren Folgendes beinhaltet:
in einem Fall, dass eine Konversationsoberfläche angezeigt wird, Empfangen (201) einer ersten Eingabe eines Benutzers, wobei die Konversationsoberfläche mindestens eine Datei beinhaltet und die erste Eingabe eine Eingabe ist, die durch den Benutzer für eine Zieldatei (10) in der mindestens einen Datei durchgeführt wird;
Springen von der Konversationsoberfläche zu einer ersten Oberfläche als Reaktion auf die erste Eingabe, wobei die erste Oberfläche eine Zieloberfläche ist, die einem Speicherort entspricht, der zum Speichern der Zieldatei (10) verwendet wird, und die Zieloberfläche die Zieldatei (10) beinhaltet;
Empfangen (203) einer zweiten Eingabe des Benutzers, wobei die zweite Eingabe eine Eingabe ist, die durch den Benutzer für die Zieldatei (10) in der ersten Oberfläche und einen Identifikator eines Zielanwendungsprogramms durchgeführt wird; und
als Reaktion auf die zweite Eingabe, Senden (204) der Zieldatei (10) unter Verwendung des Zielanwendungsprogramms; wobei
die Konversationsoberfläche eine Oberfläche in einem Anwendungsprogramm ist, das sich von der Zielanwendung unterscheidet; und
das Verfahren vor dem Springen von der Konversationsoberfläche zu einer ersten Oberfläche ferner Folgendes beinhaltet:
Erlangen (301) des Speicherpfads der Zieldatei (10) und Anzeigen (301) eines Prompt-Fensters basierend auf dem Speicherpfad der Zieldatei (10), wobei das Prompt-Fenster mindestens eines von Folgendem beinhaltet: ein erstes Steuerelement und den Speicherpfad der Zieldatei (10), wobei das erste Steuerelement verwendet wird, um einen Speicherbereich der Zieldatei (10) auf der elektronischen Vorrichtung anzuzeigen; und
Empfangen (302) einer dritten Eingabe des Benutzers, die für das erste Steuerelement oder einen Identifikator des Speicherpfads der Zieldatei (10) in dem Prompt-Fenster durchgeführt wird; und
das Springen von der Konversationsoberfläche zu einer ersten Oberfläche Folgendes beinhaltet:
Springen von der Konversationsoberfläche zu der Zieloberfläche als Reaktion auf die dritte Eingabe.

2. Verfahren gemäß Anspruch 1, wobei das Prompt-Fenster mindestens den Speicherpfad der Zieldatei (10) beinhaltet, die Konversationsoberfläche ferner einen Zieleingabebereich beinhaltet, der Zieleingabebereich verwendet wird, um einen Dateinamen einer Datei einzugeben, und die erste Eingabe eine Eingabe ist, die durch den Benutzer für einen Dateinamen der Zieldatei (10) in dem Zieleingabebereich durchgeführt wird; und
das Erlangen (301) des Speicherpfads der Zieldatei (10) Folgendes beinhaltet: Bestimmen, anhand eines Speicherbereichs auf der elektronischen Vorrichtung basierend auf dem Dateinamen der Zieldatei (10), einer Datei, die dem Dateinamen der Zieldatei (10) entspricht, um den Speicherpfad der Zieldatei (10) zu erlangen.

3. Verfahren gemäß Anspruch 1 oder 2, wobei das Verfahren vor dem Empfangen (203) der zweiten Eingabe des Benutzers ferner Folgendes beinhaltet:
Empfangen einer vierten Eingabe des Benutzers, wobei die vierte Eingabe eine Eingabe ist, die durch den Benutzer für die Zieldatei (10) in der Zieloberfläche durchgeführt wird; und
Verschieben der Zieldatei (10) in einen Zielordner als Reaktion auf die vierte Eingabe.

4. Eine Dateisendeeinrichtung (80), wobei die Dateisendeeinrichtung (80) Folgendes beinhaltet: ein Empfangsmodul (81), ein Anzeigemodul (82) und ein Sendemodul (83), wobei
das Empfangsmodul (81) für Folgendes konfiguriert ist: in einem Fall, dass eine Konversationsoberfläche angezeigt wird, Empfangen einer ersten Eingabe eines Benutzers, wobei die Konversationsoberfläche mindestens eine Datei beinhaltet und die erste Eingabe eine Eingabe ist, die durch den Benutzer für eine Zieldatei (10) in der mindestens einen Datei durchgeführt wird;
das Anzeigemodul (82) konfiguriert ist, um als Reaktion auf die erste Eingabe, die durch das Empfangsmodul (81) empfangen wird, von der Konversationsoberfläche zu einer ersten Oberfläche zu springen, wobei die erste Oberfläche eine Zieloberfläche ist, die einem Speicherort entspricht, der zum Speichern der Zieldatei (10) verwendet wird, und die Zieloberfläche die Zieldatei (10) beinhaltet;
das Empfangsmodul (81) ferner konfiguriert ist, um eine zweite Eingabe des Benutzers zu empfangen, wobei die zweite Eingabe eine Eingabe ist, die durch den Benutzer für die Zieldatei (10) in der ersten Oberfläche und einen Identifikator eines Zielanwendungsprogramms durchgeführt wird; und
das Sendemodul (83) für Folgendes konfiguriert ist: als Reaktion auf die zweite Eingabe, die durch das Empfangsmodul (81) empfangen wird, Senden der Zieldatei (10) unter Verwendung des Zielanwendungsprogramms; wobei die Konversationsoberfläche eine Oberfläche in einem Anwendungsprogramm ist, das sich von der Zielanwendung unterscheidet; und
die Dateisendeeinrichtung (80) ferner Folgendes beinhaltet: ein Erlangungsmodul,
wobei das Erlangungsmodul für Folgendes konfiguriert ist: bevor das Anzeigemodul (82) von der Konversationsoberfläche zu der ersten Oberfläche springt, Erlangen des Speicherpfads der Zieldatei (10);
das Anzeigemodul (82) ferner konfiguriert ist, um basierend auf dem Speicherpfad, der zu der Zieldatei (10) gehört und der durch das Erlangungsmodul erlangt wird, ein Prompt-Fenster anzuzeigen, wobei das Prompt-Fenster mindestens eines von Folgendem beinhaltet: ein erstes Steuerelement und den Speicherpfad der Zieldatei (10), wobei das erste Steuerelement verwendet wird, um einen Speicherbereich der Zieldatei (10) auf der Dateisendeeinrichtung (80) anzuzeigen;
das Empfangsmodul (81) ferner konfiguriert ist, um eine dritte Eingabe des Benutzers zu empfangen, die für das erste Steuerelement oder einen Identifikator des Speicherpfads der Zieldatei (10) in dem Prompt-Fenster durchgeführt wird; und das Anzeigemodul (82) spezifisch konfiguriert ist, um als Reaktion auf die dritte Eingabe, die durch das Empfangsmodul (81) empfangen wird, von der Konversationsoberfläche zu der Zieloberfläche zu springen.

5. Einrichtung (80) gemäß Anspruch 4, wobei das Prompt-Fenster mindestens den Speicherpfad der Zieldatei (10) beinhaltet, die Konversationsoberfläche ferner einen Zieleingabebereich beinhaltet, der Zieleingabebereich verwendet wird, um einen Dateinamen einer Datei einzugeben, und die erste Eingabe eine Eingabe ist, die durch den Benutzer für einen Dateinamen der Zieldatei (10) in dem Zieleingabebereich durchgeführt wird; und
das Erlangungsmodul spezifisch konfiguriert ist, um anhand eines Speicherbereichs auf der Einrichtung basierend auf dem Dateinamen der Zieldatei (10) eine Datei zu bestimmen, die dem Dateinamen der Zieldatei (10) entspricht, um den Speicherpfad der Zieldatei (10) zu erlangen.

6. Einrichtung (80) gemäß Anspruch 4 oder 5, wobei das Empfangsmodul (81) ferner für Folgendes konfiguriert ist: vor dem Empfangen der zweiten Eingabe des Benutzers, Empfangen einer vierten Eingabe des Benutzers, wobei die vierte Eingabe eine Eingabe ist, die durch den Benutzer für die Zieldatei (10) in der Zieloberfläche durchgeführt wird; und
die Dateisendeeinrichtung (80) ferner Folgendes beinhaltet: ein Verschiebemodul, wobei das Verschiebemodul konfiguriert ist, um die Zieldatei (10) als Reaktion auf die vierte Eingabe, die durch das Empfangsmodul (81) empfangen wird, in einen Zielordner zu verschieben, wobei der Zielordner ein durch den Benutzer erstellter Ordner ist.

7. Eine elektronische Vorrichtung (90, 100), die einen Prozessor (91, 110), einen Speicher (92, 109) und ein Programm oder Anweisungen, das/die in dem Speicher (92, 109) gespeichert und auf dem Prozessor (91, 110) ausführbar ist/sind, beinhaltet, wobei, wenn das Programm oder die Anweisungen durch den Prozessor (91, 110) ausgeführt wird/werden, die Schritte des Dateisendeverfahrens gemäß einem der Ansprüche 1 bis 3 implementiert werden.

8. Ein lesbares Speichermedium, wobei das lesbare Speichermedium ein Programm oder Anweisungen speichert und, wenn das Programm oder die Anweisungen durch einen Prozessor (91, 110) ausgeführt wird/werden, die Schritte des Dateisendeverfahrens gemäß einem der Ansprüche 1 bis 3 implementiert werden.

9. Ein Chip, wobei der Chip einen Prozessor und eine Kommunikationsschnittstelle beinhaltet, die Kommunikationsschnittstelle mit dem Prozessor gekoppelt ist und der Prozessor konfiguriert ist, um ein Programm oder Anweisungen ablaufen zu lassen, um das Dateisendeverfahren gemäß einem der Ansprüche 1 bis 3 zu implementieren.

10. Ein Computerprogrammprodukt, wobei ein Computerprogramm des Computerprogrammprodukts durch mindestens einen Prozessor (91, 110) ausgeführt wird, um das Dateisendeverfahren gemäß einem der Ansprüche 1 bis 3 zu implementieren.

## Revendications

1. Un procédé d'envoi de fichier, effectué par un dispositif électronique, le procédé comprenant :
dans un cas où une interface de conversation est affichée, la réception (201) d'une première entrée d'un utilisateur, l'interface de conversation comprenant au moins un fichier, et la première entrée étant une entrée effectuée par l'utilisateur pour un fichier cible (10) dans l'au moins un fichier ;
le saut de l'interface de conversation à une première interface en réponse à la première entrée, la première interface étant une interface cible correspondant à un emplacement de stockage utilisé pour stocker le fichier cible (10), et l'interface cible comprenant le fichier cible (10) ;
la réception (203) d'une deuxième entrée de l'utilisateur, la deuxième entrée étant une entrée effectuée par l'utilisateur pour le fichier cible (10) dans la première interface et un identifiant d'un programme d'application cible ; et
en réponse à la deuxième entrée, l'envoi (204) du fichier cible (10) en utilisant le programme d'application cible ; dans lequel
l'interface de conversation est une interface dans un programme d'application qui est différente de l'application cible ; et
avant le saut de l'interface de conversation à une première interface, le procédé comprend en outre :
l'obtention (301) du chemin de stockage du fichier cible (10), et l'affichage (301) d'une fenêtre d'invite sur la base du chemin de stockage du fichier cible (10), la fenêtre d'invite comprenant au moins l'un des éléments suivants : une première commande et
le chemin de stockage du fichier cible (10), la première commande étant utilisée pour afficher une zone de stockage du fichier cible (10) sur le dispositif électronique ; et
la réception (302) d'une troisième entrée de l'utilisateur effectuée pour la première commande ou un identifiant du chemin de stockage du fichier cible (10) dans la fenêtre d'invite ; et
le saut de l'interface de conversation à une première interface comprend :
le saut de l'interface de conversation à l'interface cible en réponse à la troisième entrée.

2. Le procédé selon la revendication 1, dans lequel la fenêtre d'invite comprend au moins le chemin de stockage du fichier cible (10), l'interface de conversation comprend en outre une zone d'entrée cible, la zone d'entrée cible est utilisée pour entrer un nom de fichier d'un fichier, et la première entrée est une entrée effectuée par l'utilisateur pour un nom de fichier du fichier cible (10) dans la zone d'entrée cible ; et
l'obtention (301) du chemin de stockage du fichier cible (10) comprend :
la détermination, à partir d'une zone de stockage sur le dispositif électronique sur la base du nom de fichier du fichier cible (10), d'un fichier correspondant au nom de fichier du fichier cible (10), afin d'obtenir le chemin de stockage du fichier cible (10).

3. Le procédé selon la revendication 1 ou la revendication 2, dans lequel avant la réception (203) de la deuxième entrée de l'utilisateur, le procédé comprend en outre :
la réception d'une quatrième entrée de l'utilisateur, la quatrième entrée étant une entrée effectuée par l'utilisateur pour le fichier cible (10) dans l'interface cible ; et
le déplacement du fichier cible (10) vers un dossier cible en réponse à la quatrième entrée.

4. Un appareil d'envoi de fichier (80), l'appareil d'envoi de fichier (80) comprenant : un module de réception (81), un module d'affichage (82), et un module d'envoi (83), dans lequel
le module de réception (81) est configuré pour : dans un cas où une interface de conversation est affichée, recevoir une première entrée d'un utilisateur, l'interface de conversation comprenant au moins un fichier, et la première entrée étant une entrée effectuée par l'utilisateur pour un fichier cible (10) dans l'au moins un fichier ;
le module d'affichage (82) est configuré pour sauter de l'interface de conversation à une première interface en réponse à la première entrée reçue par le module de réception (81), la première interface étant une interface cible correspondant à un emplacement de stockage utilisé pour stocker le fichier cible (10), et l'interface cible comprenant le fichier cible (10) ;
le module de réception (81) est configuré en outre pour recevoir une deuxième entrée de l'utilisateur, la deuxième entrée étant une entrée effectuée par l'utilisateur pour le fichier cible (10) dans la première interface et un identifiant d'un programme d'application cible ; et
le module d'envoi (83) est configuré pour : en réponse à la deuxième entrée reçue par le module de réception (81), envoyer le fichier cible (10) en utilisant le programme d'application cible ; dans lequel
l'interface de conversation est une interface dans un programme d'application qui est différente de l'application cible ; et
l'appareil d'envoi de fichier (80) comprend en outre : un module d'obtention, le module d'obtention étant configuré pour : avant que le module d'affichage (82) saute de l'interface de conversation à la première interface, obtenir le chemin de stockage du fichier cible (10) ;
le module d'affichage (82) est configuré en outre pour afficher une fenêtre d'invite sur la base du chemin de stockage qui est celui du fichier cible (10) et qui est obtenu par le module d'obtention, la fenêtre d'invite comprenant au moins l'un des éléments suivants : une première commande et le chemin de stockage du fichier cible (10), la première commande étant utilisée pour afficher une zone de stockage du fichier cible (10) sur l'appareil d'envoi de fichier (80) ;
le module de réception (81) est configuré en outre pour recevoir une troisième entrée de l'utilisateur effectuée pour la première commande ou un identifiant du chemin de stockage du fichier cible (10) dans la fenêtre d'invite ; et
le module d'affichage (82) est spécifiquement configuré pour sauter de l'interface de conversation à l'interface cible en réponse à la troisième entrée reçue par le module de réception (81).

5. L'appareil (80) selon la revendication 4, dans lequel la fenêtre d'invite comprend au moins le chemin de stockage du fichier cible (10), l'interface de conversation comprend en outre une zone d'entrée cible, la zone d'entrée cible est utilisée pour entrer un nom de fichier d'un fichier, et la première entrée est une entrée effectuée par l'utilisateur pour un nom de fichier du fichier cible (10) dans la zone d'entrée cible ; et
le module d'obtention est spécifiquement configuré pour déterminer, à partir d'une zone de stockage sur l'appareil sur la base du nom de fichier du fichier cible (10), un fichier correspondant au nom de fichier du fichier cible (10), afin d'obtenir le chemin de stockage du fichier cible (10).

6. L'appareil (80) selon la revendication 4 ou la revendication 5, dans lequel le module de réception (81) est configuré en outre pour : avant la réception de la deuxième entrée de l'utilisateur, recevoir une quatrième entrée de l'utilisateur, la quatrième entrée étant une entrée effectuée par l'utilisateur pour le fichier cible (10) dans l'interface cible ; et l'appareil d'envoi de fichier (80) comprend en outre : un module de déplacement, le module de déplacement étant configuré pour déplacer le fichier cible (10) vers un dossier cible en réponse à la quatrième entrée reçue par le module de réception (81), le dossier cible étant un dossier créé par l'utilisateur.

7. Un dispositif électronique (90, 100), comprenant un processeur (91, 110), une mémoire (92, 109), et un programme ou des instructions qui est stocké ou sont stockées dans la mémoire (92, 109) et exécutables sur le processeur (91, 110), dans lequel, lorsque le programme est exécuté ou les instructions sont exécutées par le processeur (91, 110), les étapes du procédé d'envoi de fichier selon l'une quelconque des revendications 1 à 3 sont mises en œuvre.

8. Un support de stockage lisible, le support de stockage lisible stockant un programme ou des instructions, et lorsque le programme est exécuté ou les instructions sont exécutées par un processeur (91, 110), les étapes du procédé d'envoi de fichier selon l'une quelconque des revendications 1 à 3 sont mises en œuvre.

9. Une puce, la puce comprenant un processeur et une interface de communication, l'interface de communication étant couplée au processeur, et le processeur étant configuré pour gérer un programme ou des instructions afin de mettre en œuvre le procédé d'envoi de fichier selon l'une quelconque des revendications 1 à 3.

10. Un produit-programme informatique, dans lequel un programme informatique du produit-programme informatique est exécuté par au moins un processeur (91, 110) afin de mettre en œuvre le procédé d'envoi de fichier selon l'une quelconque des revendications 1 à 3.
